# EUROPEAN PATENT SPECIFICATION

(11) **EP 1 918 156 B1**
(45) Date of publication and mention of the grant of the patent: **26.10.2016**
(21) Application number: 06023098.4
(22) Date of filing: 06.11.2006
(51) Int. Cl.: B60N 2/66, A47C 7/46

(54) **Support assembly for a seat**
Tragekonstruktion für einen Sitz
Ensemble de support pour un siège

(43) Date of publication of application: 07.05.2008
(73) Proprietor: L&P Swiss Holding Company, 9303 Wittenbach (CH)
(72) Inventor: Samain, Maxime, 8870 Emelgem (BE)
(74) Representative: Banzer, Hans-Jörg

(56) References cited:
- EP-A- 1 680 983
- EP-A- 1 680 984
- EP-A1- 1 733 649
- EP-A1- 1 733 650
- JP-A- 8 019 452
- JP-A- 2006 014 871
- US-A1- 2006 226 683

## Description

The present invention relates to a support assembly for a seat. In particular, the present invention relates to an adjustable support assembly, such as a lumbar support assembly, that includes a support device, such as a wire framework, overmolded wires, or an overmolded wire pad, which support assembly is adjustable and provides load bearing support for upholstery of a seat, for example for use in automotive or furniture seating.

Support assemblies of the aforementioned kind are well-known in the art and may have various configurations determined by the design of the seat in which the support assembly is to be mounted. A support assembly of this kind is for example known from GB 2 342 287 A. The support assembly described in this document comprises a wire framework having two lateral side wires which are suspendable in a seat frame and between which there extends a plurality of transverse wires for providing load bearing support for upholstery of the seat.

Furthermore, it is known from EP 0 552 904 B1 to provide an adjusting mechanism for a support assembly. The support assembly disclosed in this document is attached to a seat frame via springs, and Bowden cable mechanisms are provided by means of which the support assembly can be pivoted at hinge points provided on the lateral side wires. A further mechanism that does not require the use of such hinges is known from US 5,988,745 A.

JP 2006 014871 A, which serves as basis for the preamble of claim 1, discloses a vehicle seat having a lumbar support in which a pair of wires is coupled to opposite ends of a flexible mat, the pair of wires being coupled to each other via a pivotable member. A Bowden cable wire is coupled to the pivotable member so as to effect a pivoting motion of the pivotable member, in order to adjust a tension in the pair of wires.

JP 08 019452 A discloses a back supporting device for a vehicle seat having a first cable and a second cable coupled to the first cable by a connecting member.

EP 1 680 984 A1 discloses a lumbar support assembly having a Bowden cable arrangement. An end portion of a wire of the Bowden cable arrangement is anchored to a front edge of a seat frame.

US 2006/0226683 A1 discloses a lumbar support in which several cables are spaced from each other vertically within a support plate.

EP 1 733 649 A1, which is prior art pursuant to Article 54(3) EPC, discloses a seat structure comprising a guiding element for attaching a cable having a sleeve and a wire running in the sleeve to a seat frame.

EP 1 733 650 A1, which is prior art pursuant to Article 54(3) EPC, discloses an adjustable support assembly using a traction wire arrangement. A coupling device couples a first traction wire to a Bowden cable.

In order to adjust the degree of lumbar support, the support device or a part thereof is usually moved in a direction extending perpendicular to a support plane. In order to achieve the adjustment, the support device may be pivoted about a transversal axis, may be arched or may be moved as a whole. In each case, it is desirable that the support device is moved on both of its lateral sides in an identical manner so that a symmetric lumbar support feeling is created. Such a symmetrical movement of both sides of the support device is, however, difficult to achieve and typically requires two separate Bowden cable arrangements which render the design of the support assembly more complicated and more costly.

A solution to this problem has been proposed in EP 1 680 984 A1. Generally speaking, the solution consists in a sheath of a single Bowden cable arrangement being attached to first and second side members of a support arrangement via first and second attachment means, respectively. The use of a single Bowden cable to provide adjustable lumbar support by simultaneously acting on two side members of the support arrangement has the effect that symmetrical support may be provided while keeping the construction of the support assembly simple.

Fig. 6 shows a lumbar support assembly as disclosed in EP 1 680 984 A1. The support assembly 102 comprises a wire framework 103 that is attached to a seat frame 101 via suitable means, such as hooks. The wire framework 103 comprises two side wires 104. A Bowden cable 110 comprises a sheath 111 and a wire extending therethrough, which is at one end coupled to an actuator 120. Another end of the Bowden cable wire is formed in the shape of a hook 113 for engagement with the seat frame 101. The Bowden cable sheath 111 is attached to both lateral side wires 104 via attachment brackets 117 and 115, respectively, which include through holes 118 and 116, respectively, for the Bowden cable wire. The attachment bracket 117 is attached to the seat frame 101 via a spring 119. In order to adjust the support assembly 102, a free length of the Bowden cable wire is changed via actuator 120, which has the effect of a force acting symmetrically on the two lateral side wires 104 of the wire framework 103.

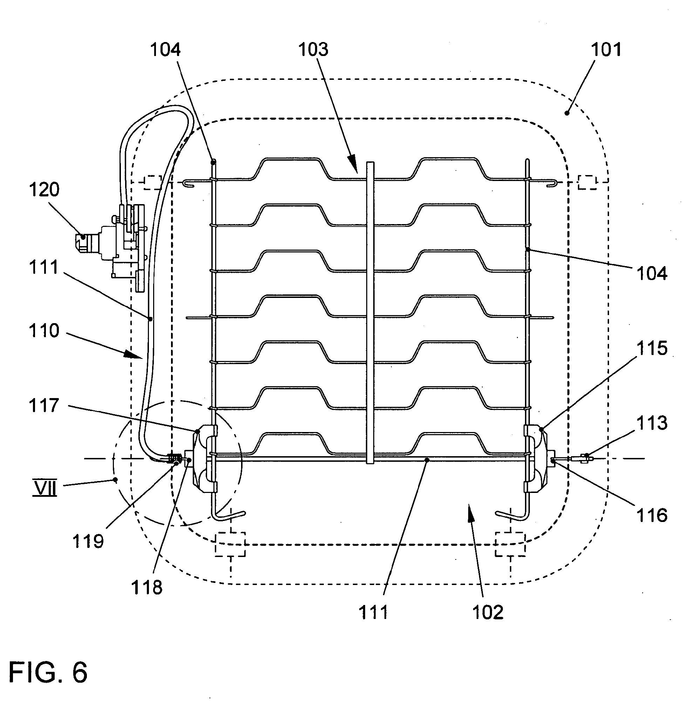

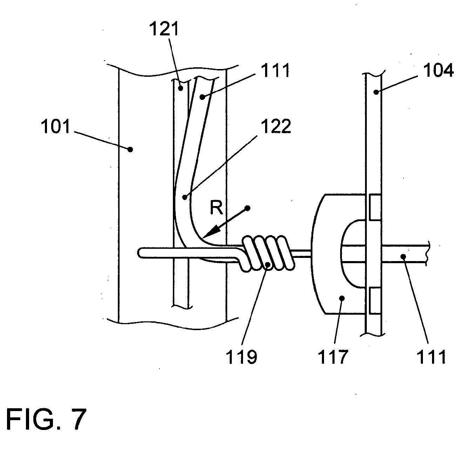

A problem of the support assembly shown in Fig. 6 is that the Bowden cable 111 has to make a very sharp bend in proximity to the position of the spring 119. More specifically, as may be seen in the detail view of Fig. 7, which shows the region indicated by a dashed circle VII in Fig. 6, the Bowden cable sheath 111 is guided along the seat frame 101 before entering spring 119. The guiding may be achieved, e.g., in that a portion 122 of the Bowden cable sheath 111 is clampingly held in a guiding groove 121. With the size of the seat frame 101 being limited, the region in which the Bowden cable sheath 111 may be attached to the seat frame 101 is also limited, which results in the Bowden cable sheath 111 having a sharp bend in the region where it leaves the guiding groove 121 and enters spring 119, i.e., the curvature radius R is small.

The sharp bend may give rise to several problems, such as a reduced durability of the Bowden cable 110, unstable cable routing or noise when the support assembly is re-adjusted.

It is an object of the present invention to provide an improved support assembly for a seat. In particular, it is an object to provide a support assembly having a simple structure and avoiding sharp bends in the Bowden cable. It is yet another object of the present invention to provide such a support assembly that avoids problems related to unstable cable routing.

According to the present invention, this object is achieved by a support assembly as defined in claim 1. The dependent claims define preferred or advantageous embodiments of the invention.

According to an aspect of the invention, a support assembly for a seat is provided which comprises a support device that is configured to be attached to a seat frame and has a first side and a second side, the support device being adjustable by acting on the first side and the second side. The support assembly further comprises a Bowden cable arrangement having a Bowden cable wire and a Bowden cable sheath. A traction device is coupled to both the first side and the second side of the support device for acting thereon. The support assembly further comprises a coupling device which couples the traction device and the Bowden cable arrangement in such a manner that the traction device is acted on in dependence on a tension of the Bowden cable wire. The coupling device has a guiding means for guiding the Bowden cable wire, which comprises a hole forming a shoulder for abutment of an end of the Bowden cable sheath. It is to be appreciated that, typically, the traction device will be distinct and separate from the Bowden cable arrangement. Since the traction device is coupled to both the first side and the second side of the support device, a symmetrical support feeling may be achieved when the traction device is tensioned or untensioned and simultaneously acts on the two sides. Since a tension applied to the Bowden cable wire may be transferred to the traction device via the coupling device, it is no longer necessary for the Bowden cable arrangement to be attached to both sides of the support device. Rather, the provision of the traction device that is separate from and coupled to the Bowden cable arrangement affords additional design options that allow sharp bends of the Bowden cable to be reduced or eliminated. The first side and the second side of the support device may, in particular, be lateral sides of the support device, i.e., longitudinally extending sides.

Preferably, the coupling device acts on the traction device in such a way that a tension of the traction device is changed in dependence on a tension of the Bowden cable wire. The tension of the Bowden cable wire is, in turn, preferably adjusted by adjusting a free length or extension length of the Bowden cable wire using an actuator.

A change of the tension of the traction device in dependence on the tension of the Bowden cable wire is preferably achieved in that an end portion of the Bowden cable sheath is attached to the coupling device, an end portion of the Bowden cable wire extends from the coupling device in an extension direction, and the traction device extends from the coupling device in a direction that is essentially opposite to the extension direction. The end portion of the Bowden cable wire that extends from the coupling device is preferably configured to be attached to the seat frame. By virtue of this construction, sharp bends of the Bowden cable may be avoided, since the Bowden cable wire may smoothly extend throughout the coupling device towards the seat frame. When the free length of the Bowden cable wire is changed, the coupling device is moved towards or away from the seat frame, thereby adjusting the tension of the traction device in dependence on the tension applied to the Bowden cable wire.

The traction device is a further Bowden cable arrangement having a further Bowden cable wire and a further Bowden cable sheath. The support assembly may then comprise attachment means for attaching an end portion of the further Bowden cable wire to the coupling device. The attachment means may, for example, comprise an attachment hole formed in a body of the coupling device that comprises a narrow portion for receiving the Bowden cable wire and a nipple formed at the end portion having outer dimensions larger than a diameter of the narrow portion. Thereby, the further Bowden cable arrangement is securely anchored to the coupling device. The further Bowden cable arrangement is a particularly advantageous implementation of the traction device as it can be handled easily and as it allows, by virtue of its flexibility, that the first side and the second side of the support device may be acted on in a symmetric manner.

Preferably, another end portion of the further Bowden cable wire which is not attached to the coupling device is configured to be connected to a side of the seat frame, and an end portion of the Bowden cable wire extending from the coupling device is configured to be connected to another side of the seat frame. Thereby, the support assembly may be attached to the seat frame in such a manner that the further Bowden cable wire extends from the side of the seat frame to the coupling device, and that the Bowden cable wire extends from the coupling device to the other side of the seat frame, thereby bridging the full distance between the sides of the seat frame and allowing the support assembly to be hooked onto the seat frame. The end portions of the further Bowden cable wire and/or of the Bowden cable wire may have a shape for hooking engagement with the seat frame, e.g., in the form of a Z-shaped nipple.

In a preferred embodiment, the further Bowden cable sheath extends continuously from the first side to the second side of the support device. The continuously extending further Bowden cable sheath prevents a feeling of discomfort when the further Bowden cable wire is tensioned and the support device is moved or arched.

Preferably, holding means are provided for slidably holding the further Bowden cable wire with respect to the support device. The holding means may have a clip portion for attaching the holding means to the support device. The holding means may further have guiding means for guiding a portion of the further Bowden cable wire. Still further, the holding means preferably have retaining means for retaining an end of the further Bowden cable sheath, thereby allowing the end of the further Bowden cable sheath to be attached to the first side and/or the second side of the support device via the holding means. The clip portion allows the holding means to be clipped or snapped onto the support device. In particular, the subassembly comprised of the Bowden cable, the further Bowden cable arrangement, and the coupling device may be formed separately from the support device and may be snapped onto the support device at a convenient stage of assembly.

The support assembly may also include not only one traction device, but rather a plurality of traction devices coupled to the first and second sides of the support device for acting thereon at positions offset from each other, as well as respective Bowden cable arrangements and respective coupling devices for coupling the respective traction devices and the respective Bowden cable arrangements.

The support device may have any suitable configuration. In particular, the support device may comprise a first and second side member forming the first and second side of the support device, respectively. A plurality of transverse members may extends between the first and second side members. The support device may, e.g., comprise a wire framework, overmolded wires, an overmolded wire pad or any other suitable adjustable support device.

According to another aspect of the invention, a seat structure is provided which comprises a seat frame and the support assembly according to any one embodiment of the invention.

In the support assembly according to the various aspects and embodiments of the invention, the coupling device is employed for coupling the traction device and the Bowden cable arrangement. Thereby, the Bowden cable which is at one end coupled to an actuator does no longer need to be strongly bent. At the same time, a symmetric support feeling is maintained by symmetric action of the traction device onto the first side and the second side of the support device.

The support assembly according to the various aspects and embodiments of the present invention may be employed to any kind of seats. In particular, the present invention may be applied to seats in which high seating comfort, adjustability and durability is desired, such as automotive or furniture seating.

Additional features and advantages of the present invention will become more readily understood from the following description of preferred embodiments with reference to the accompanying drawings.
Fig. 1 is a schematic plan view from back of a support assembly according to an embodiment of the invention.
Fig. 2 is a schematic top view of the support assembly of Fig. 1.
Fig. 3 is a perspective detail view of the support assembly of Fig. 1.
Fig. 4A is a schematic top view of a coupling device employed in the support assembly of Fig. 1, and Fig. 4B is a schematic cross sectional view.
Fig. 5 is a schematic plan view from back of a support assembly according to another embodiment of the invention.
Fig. 6 is a plan view of a conventional support assembly.
Fig. 7 is a detail view of the support assembly of Fig. 6.

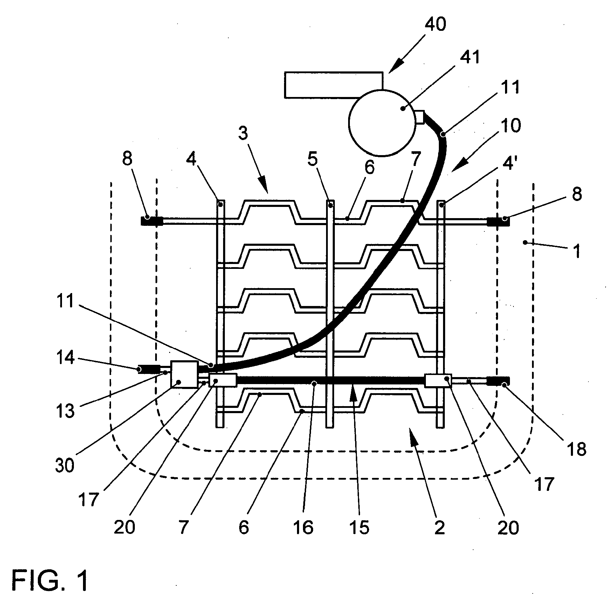

Fig. 1 shows a support assembly 2 for a seat according to an embodiment of the invention which is to be attached to a seat frame 1 schematically indicated by broken lines. The support assembly 2 comprises a support device 3 which is also referred to as a suspension pad or a platform element in the art. In the example shown, the support device 3 is formed as a wire framework. The support device 3 comprises a first side wire 4 and a second side wire 4' forming elongate side members and a plurality of transverse wires 6 extending between the side wires 4, 4'. The transverse wires 6 are anchored to the side wires 4, 4', e.g., by being wound around the side wires 4, 4'. Intermediate portions 7 of the transverse wires 6 are angled in the support plane so that the support device 3 becomes extensible under loading placed on the support device. The transverse wires 6 penetrate through or are coupled to an intermediate vertical cord 5, which may be formed of paper or synthetic plastic material and which serves to provide some additional stability to the wire framework. Further, the intermediate vertical cord 5 assists in maintaining a predetermined vertical spacing between the transverse wires 6. The side wires 4, 4' may be formed for example of paper wrapped steel cords.

As may also be seen from Fig. 1, one or several of the transverse wires 6 may laterally extend beyond the side wires 4, 4' so as to terminate in free ends 8. These free ends 8 may be formed into hook-like fingers for hooking engagement with the seat frame 1, so as to attach the support assembly to the seat frame. While not shown in Fig. 1, other transverse wires 6 may also laterally extend beyond the side wires 4, 4' so as to terminate in free ends which are suitably shaped in order to enable more versatile lateral support to be provided, particularly in the lumbar region of a backrest. Further, while not shown in Fig. 1, the support device 3 may also be attached to the seat frame 1 at lower ends of the side wires 4, 4'.

It is to be understood that the implementation of the support device 3 in the form of a wire framework is only exemplary and may be substituted by any other suitable device that provides support for upholstery of a seat. For example, the support device 3 may also be constituted by a partially or fully overmolded wire pad, or an integrally formed support device made of plastic or metal that provides sufficient support and adjustability. Further, the side wires 4, 4' may be substituted by other suitable side members, such as push rods.

The support device 3 is adjustable since a lower portion of the side wires 4, 4' may be moved in a forward and backward direction, resulting in a pivoting motion of the support device, possibly accompanied by an arching of the side wires 4, 4'. For adjustment of the support device 3, the support assembly 2 comprises an adjustment assembly that generally includes a Bowden cable 10, a further Bowden cable 15, a coupling device 30 and an actuator 40. The Bowden cable 10 has a Bowden cable sheath 11 and a Bowden cable wire 12, only an end portion 13 of which is shown in Fig. 1. As will be described more fully below, the Bowden cable wire extends through the coupling device 30 and has its ends anchored to a pulley 41 of the actuator 40 and a side of the seat frame 1, respectively. For hooking engagement with the seat frame, a hook portion 14 is provided on the end portion 13 of the Bowden cable wire, which hook portion 14 may, for example, have the form of a Z-shaped nipple. The further Bowden cable 15 is coupled both to the first side wire 4 and to the second side wire 4' of the support device 3 for acting thereon. Therefore, in the embodiment of Fig. 1, the further Bowden cable 15 corresponds to the traction device as recited herein. The further Bowden cable 15 comprises a further Bowden cable sheath 16 and a further Bowden cable wire 17. The further Bowden cable wire 17 has its ends anchored on the coupling device 30 and the seat frame 1, respectively. For hooking engagement with the seat frame 1, an end portion of the further Bowden cable wire 17 is provided with a hook portion 18 which, again, may have the form of a Z-shaped nipple. Holding means 20 are attached to the first side wire 4 and the second side wire 4' and slidingly hold the further Bowden cable wire 17 with respect to the support device 3. In addition, the pair of holding means 20 has the function of attaching the further Bowden cable sheath 16 to the side wires 4, 4'.

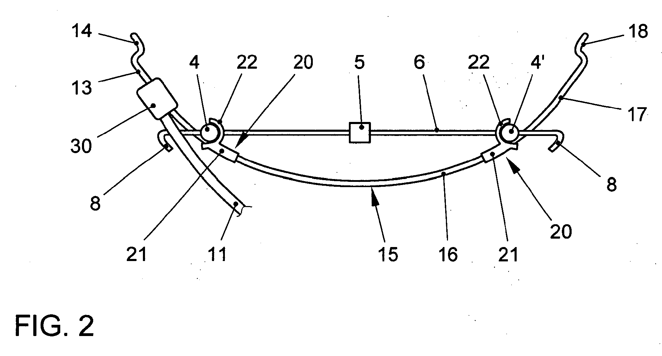

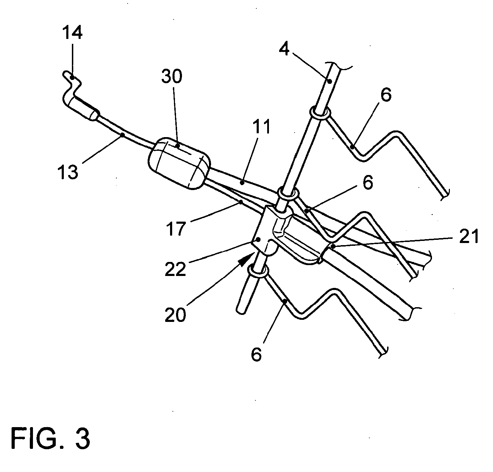

As may be seen in the top view of Fig. 2 and the perspective detail view of Fig. 3, the holding means 20 each comprise a clip portion 22 for attaching the holding means to the respective side wires 4, 4' and guiding means 21 for guiding a portion of the further Bowden cable wire 17. The clip portion 22 has elasticity and has an internal shape and internal dimensions so as to conform with the side wires 4 or 4', respectively. The holding means 20 may be readily clipped or snapped onto the side wires 4, 4'. The guiding means 21 is arcuately-shaped in order to assist the further Bowden cable 15 to be in the configuration arched relative to the support plane of the support device 3, as shown in the top view of Fig. 2. Further, the retaining means 21 have a hole for receiving and retaining ends of the further Bowden cable sheath 16, which hole has an inner diameter slightly larger than an outer diameter of the Bowden cable sheath 16 and comprises a shoulder for abutment of the end of the Bowden cable sheath 16.

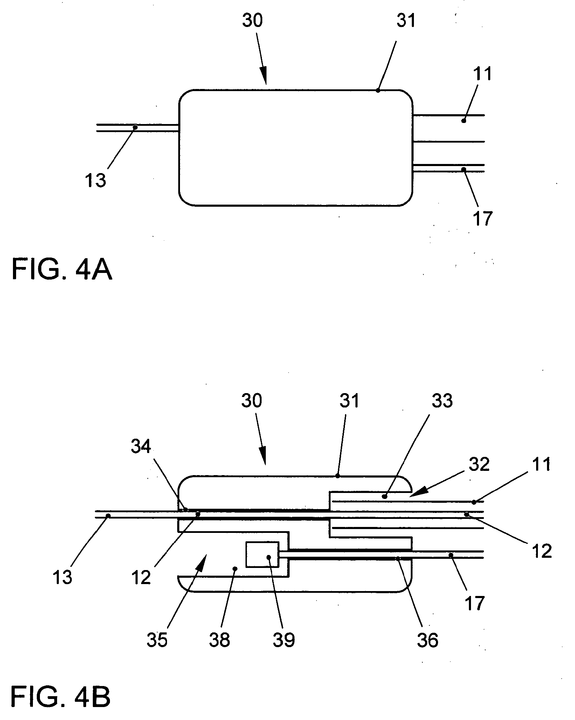

With reference to Figs. 4A and 4B, the anchoring of the Bowden cable and the further Bowden cable on the coupling device 30 will be explained next. Fig. 4A is a plan view of the coupling device 30 and the Bowden cable and further Bowden cable components attached thereto, whereas Fig. 4B represents a cross-sectional view. As may be seen in the cross-sectional view of Fig. 4B, a body 31 of the coupling device 30 has two holes 32, 35 formed therein. The guiding hole 32 functions as a guiding means for guiding the Bowden cable wire 12 through the coupling device 30 along an essentially straight path. The guiding hole 32 has a large-diameter portion 33 and a small-diameter portion 34. The large-diameter portion 33 has a diameter slightly larger than an outer diameter of the Bowden cable sheath 11. The small-diameter portion 34 has a diameter essentially equal to or slightly larger than an outer diameter of the further Bowden cable wire 12. While the Bowden cable wire 12 extends through both the large-diameter portion 33 and the small-diameter portion 34, an end portion of the Bowden cable sheath 11 is received in the large-diameter portion 33 and abuts on a shoulder formed at the transition from the large-diameter portion 33 to the small-diameter portion 34, thereby anchoring or attaching the Bowden cable sheath 11 to the coupling device 30. Naturally, it should be understood that additional attachment means for fixedly attaching the Bowden cable sheath 11 to the coupling device 30 may also be provided. The attachment hole 35 in combination with a nipple 39 provided on an end portion of the further Bowden cable wire 17 functions as attachment means for attaching or anchoring the further Bowden cable wire 17 on the coupling device 30. The attachment hole 35 also comprises a large-diameter portion 38 and a small-diameter portion 36. The small-diameter portion 36 has a diameter essentially equal to or slightly larger than an outer diameter of the further Bowden cable wire 17. The nipple 39 is received in the large-diameter portion 38, but has outer dimensions larger than the diameter of the small-diameter portion 36 which prevents the nipple 39 from being drawn into the small-diameter portion 36 as the further Bowden cable wire 17 becomes tensioned.

An important feature of the coupling device 30 is that it is constructed in such a way that the free end 13 of the Bowden cable wire 12 that is to be hinged onto the seat frame and the further Bowden cable wire 17 extend from the coupling device 30 in essentially opposite directions, namely to the left and to the right in Fig. 4b. Further, both the Bowden cable wire 12 and the further Bowden cable wire 17 are guided through the body 31 of the coupling device 30 along an essentially straight path. It should be noted that, while the holes in Fig. 4b are shown to be essentially straight, the holes could also be slightly bent, as long as the radius of curvature of the holes does not become too small. This construction of the coupling device 30 as shown in Fig. 4b has several important effects. As may be seen when considering Fig. 4b in combination with Fig. 1, by virtue of the essentially straight guiding of the Bowden cable wire 12 through the coupling device 30, the Bowden cable 10 no longer has to make a sharp bend, contrary to the prior art discussed above. Further, as will become more readily appreciated from a description of the operation of the support assembly of Fig. 1 given below, the coupling device 30 allows tension applied to the Bowden cable wire 12 via actuator 40 to be transferred onto the further Bowden cable wire 17. Still further, the coupling device 30 is simple in construction and may therefore be manufactured at low costs. In particular, the body 31 of the coupling device 30 may be made of any suitable material that has sufficient rigidity and durability to withstand the loads applied to the Bowden cable 10 and the further Bowden cable wires 17. The body 31 of the coupling device 30 may be made, e.g., of plastic.

With reference to Figs. 1 and 4b, the operation of the support assembly will be explained next. Since the end of the Bowden cable wire 12 which is not engaged with the seat frame 1 is attached to the pulley 41, by rotation of the pulley 41 the Bowden cable wire 12 is wound onto the pulley 41 or is played out, depending on the rotation direction, thereby decreasing or increasing a free length of the Bowden cable wire 12. A decrease in free length of the Bowden cable wire 12 results in the coupling device 30 being pushed towards the side of the seat frame on which the free end of the Bowden cable wire 12 is anchored, i.e., to the left in Fig. 1. Since the further Bowden cable wire 17 is at one end anchored on the coupling device 30, the motion of the coupling device 30 to the left results in the further Bowden cable wire 17 becoming tensioned. In other words, as the coupling device 30 moves to the left, an extension length of the further Bowden cable wire 17 that extends between the two side wires 4, 4' is shortened since the end of the further Bowden cable wire anchored to the coupling device 30 is forced to also move to the left. Since the further Bowden cable wire 17 is coupled to the first side wire 4 and the second side wire 4' via the holding means 20, the tension of the further Bowden cable wire 17 is symmetrically applied to both side wires 4, 4'. Since the support device 3 is adjustable by acting on the first side wire 4 and the second side wire 4', the action of the further Bowden cable wire 17 in turn results in the support device 3 being adjusted. In the example of Figs. 1 and 2 in which the hooks or Z-shaped nipples 14, 18 are hooked into the seat frame at positions forward of the support device 3, the of tensioning the further Bowden cable wire 17 will more specifically result in the lower portion of the support device 3 being pushed forward, resulting in an arching, possibly in combination with a pivoting of the support device.

While the support assembly of Figs. 1-4 only comprises one adjustment assembly for adjusting the lower portion of the support device 3, the present invention is not limited thereto. Rather, a plurality of adjustment assemblies may be provided to a support device, so as to adjust several portions of the support device.

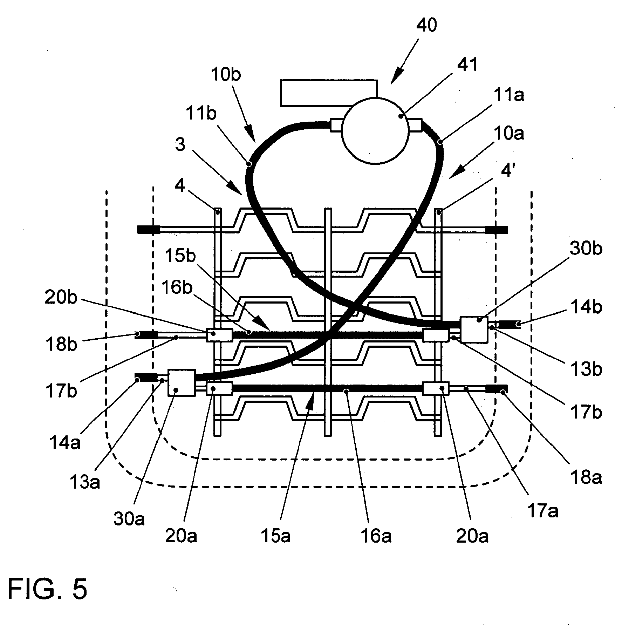

Fig. 5 shows another embodiment of the invention in which two adjustment assemblies are applied to the support device 3. Identical or similar components are labelled identically or similarly to the embodiment of Fig. 1. A first adjustment assembly comprises a Bowden cable 10a and a further Bowden cable 15a coupled to the Bowden cable 10a via a coupling device 30a and attached to the side wires 4, 4' via holding means 20a. The construction and arrangement of these components is identical to the one of the corresponding components explained with reference to Fig. 1 above. A second adjustment assembly comprises also a Bowden cable 10b and a further Bowden cable 15b coupled to the Bowden cable 10b via a coupling device 30b and attached to the side wires 4, 4' via holding means 20b. The construction and arrangement of these components is again essentially identical to the one of the corresponding components explained with reference to Fig. 1 above. As may be seen in Fig. 5, the further Bowden cable 15b of the second adjustment means is coupled to the side wires 4, 4' at positions that are vertically offset from the positions at which the further Bowden cable 15a of the first adjustment assembly is coupled to the side wires. Depending on whether the Bowden cable wire of the Bowden cable 10a or the Bowden cable wire of the Bowden cable 10b is tensioned, different portions of the support device 3 are acted on and a person sitting on the seat will perceive different support feelings. In the support assembly of Fig. 5, the ends of the Bowden cable wire of the Bowden cable 10b and of the Bowden cable wire of the Bowden cable 10a are both attached to the same pulley 41 in such a manner that, when one wire is wound onto the pulley, the other wire is played out. Consequently, a rotation of the pulley 41 in a first direction will result in a support region or a support point moving downward, while a rotation of the pulley 41 in a second, opposite direction will result in the support region or support point moving upward.

The actuator 40 may be a powered actuator that is controlled by a control unit in such a way that the pulley 41 is sequentially rotated through a series of rotary positions. By an appropriate choice of these rotary positions and the time sequence according to which the support device is adjusted, the support portion or support point perceived by the person sitting on the seat may move upward and downward such that it generates a massage effect.

It will be appreciated that various modifications and variations of the embodiments explained above are possible. For example, while the support device in the above embodiments is a wire framework, any other suitable support device that provides sufficient support for upholstery of the seat and is adjustable by acting on both sides thereof may be employed with equal facility. For example, a pad of overmolded wires may be substituted for the wire framework in the above embodiments. Further, the support device does not necessarily need to have separate side members, as long as it is adjustable by acting on both sides thereof. The end portions of the Bowden cable wire and of the further Bowden cable wire, such as the hook portions 14 and 18, do not have to be directly coupled to the seat frame 1. Rather, springs may be provided between the seat frame and the hook portions 14 and 18, i.e., the end portions of the Bowden cable wire and of the further Bowden cable wire may be coupled to the seat frame via springs. Further, the coupling device 30 is not limited to the configuration shown in Fig. 4. Rather, any coupling device that suitably couples the Bowden cable to the further Bowden cable may be employed. When several adjustment assemblies are incorporated into the support assembly for adjusting different portions of the support device, not all adjustment assemblies need to have the same configuration. In particular, an adjustment assembly that includes a coupling device and is comprised by an embodiment of the invention may be combined with a conventional adjustment assembly.

The lumbar support assemblies according to the various embodiments of the invention provide a symmetrical support feeling to the person sitting on the seat, since one traction device is used for acting on both sides of the support device. Further, sharp bends on the Bowden cable are eliminated due to the coupling of the Bowden cable to the traction device. The coupling device 30 has a simple configuration, which makes the support assembly simple in construction and cost-efficient.

## Claims

1. A support assembly for a seat, comprising
a support device (3) configured to be attached to a seat frame (1) and having a first side (4) and a second side (4'), wherein the support device is adjustable by acting on said first side (4) and said second side (4'),
a Bowden cable arrangement (10; 10a, 10b) having a Bowden cable wire (12) and a Bowden cable sheath (11; 11 a, 11b), wherein an end of said Bowden cable wire (12) is to be coupled to an actuator,
a traction device (15; 15a, 15b) coupled to both said first side (4) and said second side (4') of said support device (3) for acting thereon, and
a coupling device (30; 30a, 30b) for coupling said traction device (15; 15a, 15b) and said Bowden cable arrangement (10; 10a, 10b) and operative to act on said traction device (15; 15a, 15b) in dependence on a tension of said Bowden cable wire (12), wherein said coupling device (30; 30a, 30b) comprises guiding means (32) for guiding said Bowden cable wire (12), said guiding means comprise a guiding hole (32) formed in a body (31) of said coupling device (30) and having a narrow portion (34) for receiving said Bowden cable wire (12) and a wide portion (33) for receiving said Bowden cable sheath (11), the guiding hole (32) forming a shoulder for abutment of an end of said Bowden cable sheath (11), **characterized in that** said traction device is a further Bowden cable arrangement (15; 15a, 15b) having a further Bowden cable wire (17; 17a, 17b) and a further Bowden cable sheath (16; 16a, 16b).

2. The support assembly according to claim 1,
**characterized in that**
an end portion of said Bowden cable sheath (11; 11a, 11b) is attached to said coupling device (30; 30a, 30b),
an end portion (13; 13a, 13b) of said Bowden cable wire extends from said coupling device (30; 30a, 30b) in an extension direction, and
said traction device (15; 15a, 15b) extends from said coupling device (30; 30a, 30b) in a direction that is essentially opposite to said extension direction.

3. The support assembly according to claim 2,
**characterized in that**
said end portion (13; 13a, 13b) of said Bowden cable wire is configured for attachment to the seat frame.

4. The support assembly according to any one of the preceding claims,
**characterized by**
attachment means (35, 39) for attaching an end portion of said further Bowden cable wire (17) to said coupling device (30).

5. The support assembly according to claim 4,
**characterized in that**
said attachment means comprise an attachment hole (35) formed in a body (31) of said coupling device (30) for receiving said further Bowden cable wire (17) and a nipple (39) formed at said end portion of said further Bowden cable wire (17) and having outer dimensions which are larger than a diameter of said narrow portion (36).

6. The support assembly of claim 5,
**characterized in that**
said attachment hole (35) comprises a widened portion (38) for receiving said nipple (39).

7. The support assembly according to any one of claims 4-6,
**characterized in that**
another end portion (18; 18a, 18b) of said further Bowden cable wire (17; 17a, 17b) is configured to be connected to a side of said seat frame (1), and
an end portion (13, 14; 13a, 14a, 13b, 14b) of said Bowden cable wire (12) extending from said coupling device (30; 30a, 30b) is configured to be connected to another side of said seat frame.

8. The support assembly according to claim 7,
**characterized in that**
said end portion (13, 14; 13a, 14a, 13b, 14b) of said further Bowden cable wire (17; 17a, 17b) and/or said end portion (18; 18a, 18b) of said Bowden cable wire (12) has a shape for hooking engagement with said seat frame (1).

9. The support assembly according to any one of the preceding claims,
**characterized in that**
said further Bowden cable sheath (16; 16a, 16b) extends continuously from said first side (4) to said second side (4') of said support device (3).

10. The support assembly according to any one of the preceding claims,
**characterized by**
holding means (20; 20a, 20b) for slidably holding said further Bowden cable wire (17; 17a, 17b) with respect to said support device (3).

11. The support assembly according to claim 10,
**characterized in that**
said holding means (20; 20a, 20b) have a clip portion (22) for attaching the holding means (20; 20a, 20b) to said support device (3).

12. The support assembly according to claim 10 or 11,
**characterized in that**
said holding means (20; 20a, 20b) have guiding means (21) for guiding a portion of said further Bowden cable wire (17; 17a, 17b).

13. The support assembly according to any one of claims 10-12,
**characterized in that**
said holding means (20; 20a, 20b) have retaining means (21) for retaining an end of said further Bowden cable sheath (16; 16a, 16b).

14. The support assembly according to any one of claims 10-13,
**characterized in that**
said end of said further Bowden cable sheath (16; 16a, 16b) is attached to said first side (4) and/or said second side (4') of said support device (3) via said holding means (20; 20a, 20b).

15. The support assembly according to any one of claims 10-14,
**characterized in that**
said holding means (20; 20a, 20b) are separately provided on said first side (4) and on said second side (4') of said support device (3).

16. The support assembly according to any one of the preceding claims,
**characterized by**
a second traction device (15b) coupled to said first side (4) and said second side (4') of said support device (3) for acting thereon, wherein said second traction device (15b) is coupled to said support device (3) at positions offset from the ones at which said traction device (15) is coupled to said support device (3).

17. The support assembly according to claim 16,
**characterized by**
a second Bowden cable arrangement (10b), and
a second coupling device (30b) for coupling said second traction device (15b) and said second Bowden cable arrangement (10b).

18. The support assembly according to any one of the preceding claims,
**characterized in that**
said support device (3) comprises a first side member (4) forming said first side and a second side member (4') forming said second side of said support device (3).

19. The support assembly according to claim 18,
**characterized in that**
said support device (3) further comprises a plurality of transverse members (6) extending between said first side member (4) and said second side member (4').

20. The support assembly according to any one of the preceding claims,
**characterized in that**
said support device comprises a wire framework (3) and/or overmolded wires.

21. The support assembly according to any one of the preceding claims,
**characterized by**
a powered or manual actuator (40) to which said Bowden cable wire (12) is coupled and which is configured to selectively release or retract said Bowden cable wire (12) relative to said Bowden wire sheath (11) to adjust a tension of said Bowden cable wire (12).

22. The support assembly according to claim 21,
**characterized in that**
said actuator is a powered actuator (40) that is controlled such that the Bowden cable wire (12) is iteratively released or retracted relative to said Bowden wire sheath (11) so as to produce a massage effect.

23. The support assembly according to any one of the preceding claims,
**characterized in that**
said coupling device (30; 30a, 30b) is operative to change a tension of said traction device (15; 15a, 15b).

24. A seat structure, comprising
a seat frame (1) and
the support assembly (2) according to any one of the preceding claims attached to said seat frame (1).

## Patentansprüche

1. Trageanordnung für einen Sitz, umfassend
eine Tragevorrichtung (3), welche ausgestaltet ist, um an einem Sitzrahmen (1) angebracht zu werden, und welche eine erste Seite (4) und eine zweite Seite (4') aufweist, wobei die Tragevorrichtung einstellbar ist, indem auf die erste Seite (4) und die zweite Seite (4') eingewirkt wird,
eine Bowdenzug-Anordnung (10; 10a, 10b), welche einen Bowdenzug-Draht (12) und eine Bowdenzug-Hülle (11; 11a, 11b) aufweist, wobei ein Ende des Bowdenzug-Drahtes (12) mit einer Betätigungsvorrichtung zu koppeln ist,
eine Zugvorrichtung (15; 15a, 15b), welche sowohl mit der ersten Seite (4) als auch mit der zweiten Seite (4') der Tragevorrichtung (3) gekoppelt ist, um darauf einzuwirken, und
eine Koppelvorrichtung (30; 30a, 30b), um die Zugvorrichtung (15; 15a, 15b) und die Bowdenzug-Anordnung (10; 10a, 10b) zu koppeln, und welche betriebsbereit ist, um auf die Zugvorrichtung (15; 15a, 15b) abhängig von einem Zug des Bowdenzug-Drahtes (12) einzuwirken,
wobei die Koppelvorrichtung (30; 30a, 30b) Führungsmittel (32) umfasst, um den Bowdenzug-Draht (12) zu führen, wobei die Führungsmittel ein Führungsloch (32) umfassen, welches in einem Körper (31) der Koppelvorrichtung (30) ausgebildet ist und welches einen engen Abschnitt (34), um den Bowdenzug-Draht (12) aufzunehmen, und einen weiten Abschnitt (33), um die Bowdenzug-Hülle (11) aufzunehmen, aufweist, wobei das Führungsloch (32) eine Schulter zum Anschlag eines Endes der Bowdenzug-Hülle (11) ausbildet,
**dadurch gekennzeichnet,**
**dass** die Zugvorrichtung eine weitere Bowdenzug-Anordnung (15; 15a, 15b) ist, welche einen weiteren Bowdenzug-Draht (17; 17a, 17b) und eine weitere Bowdenzug-Hülle (16; 16a, 16b) aufweist.

2. Trageanordnung nach Anspruch 1,
**dadurch gekennzeichnet,**
**dass** ein Endabschnitt der Bowdenzug-Hülle (11; 11a, 11 b) an der Koppelvorrichtung (30; 30a, 30b) angebracht ist,
**dass** sich ein Endabschnitt (13; 13a, 13b) des Bowdenzug-Drahtes von der Koppelvorrichtung (30; 30a, 30b) in einer Ausbreitungsrichtung erstreckt, und
**dass** sich die Zugvorrichtung (15; 15a, 15b) von der Koppelvorrichtung (30; 30a, 30b) in einer Richtung erstreckt, welche der Ausbreitungsrichtung im Wesentlichen entgegen gerichtet ist.

3. Trageanordnung nach Anspruch 2,
**dadurch gekennzeichnet,**
**dass** der Endabschnitt (13; 13a, 13b) des Bowdenzug-Drahtes zur Anbringung an dem Sitzrahmen ausgestaltet ist.

4. Trageanordnung nach einem der vorhergehenden Ansprüche,
**gekennzeichnet durch**
Anbringungsmittel (35, 39), um einen Endabschnitt des weiteren Bowdenzug-Drahtes (17) an der Koppelvorrichtung (30) anzubringen.

5. Trageanordnung nach Anspruch 4,
**dadurch gekennzeichnet,**
**dass** die Anbringungsmittel umfassen ein Anbringungsloch (35), welches in einem Körper (31) der Koppelvorrichtung (30) ausgebildet ist, um den weiteren Bowdenzug-Draht (17) aufzunehmen, und einen Nippel (39), welcher an dem Endabschnitt des weiteren Bowdenzug-Drahtes (17) ausgebildet ist und Außenabmessungen aufweist, welche größer als ein Durchmesser des engen Abschnitts (36) sind.

6. Trageanordnung nach Anspruch 5,
**dadurch gekennzeichnet,**
**dass** das Anbringungsloch (35) einen erweiterten Abschnitt (38) umfasst, um den Nippel (39) aufzunehmen.

7. Trageanordnung nach einem der Ansprüche 4-6,
**dadurch gekennzeichnet,**
**dass** ein anderer Endabschnitt (18; 18a, 18b) des weiteren Bowdenzug-Drahtes (17; 17a, 17b) ausgestaltet ist, um mit einer Seite des Sitzrahmens (1) verbunden zu werden, und
**dass** ein Endabschnitt (13, 14; 13a, 14a, 13b, 14b) des Bowdenzug-Drahtes (12), welcher sich von der Koppelvorrichtung (30; 30a, 30b) erstreckt, ausgestaltet ist, um mit einer anderen Seite des Sitzrahmens verbunden zu werden.

8. Trageanordnung nach Anspruch 7,
**dadurch gekennzeichnet,**
**dass** der Endabschnitt (13, 14; 13a, 14a, 13b, 14b) des weiteren Bowdenzug-Drahtes (17; 17a, 17b) und/oder der Endabschnitt (18; 18a, 18b) des Bowdenzug-Drahtes (12) eine Form für einen einhakenden Eingriff mit dem Sitzrahmen (1) aufweist.

9. Trageanordnung nach einem der vorhergehenden Ansprüche,
**dadurch gekennzeichnet,**
**dass** sich die weitere Bowdenzug-Hülle (16; 16a, 16b) kontinuierlich von der ersten Seite (4) zu der zweiten Seite (4') der Tragevorrichtung (3) erstreckt.

10. Trageanordnung nach einem der vorhergehenden Ansprüche,
**gekennzeichnet durch**
Haltemittel (20; 20a, 20b), um den weiteren Bowdenzug-Draht (17; 17a, 17b) bezüglich der Tragevorrichtung (3) gleitend zu halten.

11. Trageanordnung nach Anspruch 10,
**dadurch gekennzeichnet,**
**dass** die Haltemittel (20; 20a, 20b) einen Clipabschnitt (22) aufweisen, um die Haltemittel (20; 20a, 20b) an der Tragevorrichtung (3) anzubringen.

12. Trageanordnung nach Anspruch 10 oder 11,
**dadurch gekennzeichnet,**
**dass** die Haltemittel (20; 20a, 20b) Führungsmittel (21) aufweisen, um einen Abschnitt des weiteren Bowdenzug-Drahtes (17; 17a, 17b) zu führen.

13. Trageanordnung nach einem der Ansprüche 10-12,
**dadurch gekennzeichnet,**
**dass** die Haltemittel (20; 20a, 20b) Rückhaltemittel (21) aufweisen, um ein Ende der weiteren Bowdenzug-Hülle (16; 16a, 16b) zurückzuhalten.

14. Trageanordnung nach einem der Ansprüche 10-13,
**dadurch gekennzeichnet,**
**dass** das Ende der weiteren Bowdenzug-Hülle (16; 16a, 16b) an der ersten Seite (4) und/oder der zweiten Seite (4') der Tragevorrichtung (3) mittels der Haltemittel (20; 20a, 20b) angebracht ist.

15. Trageanordnung nach einem der Ansprüche 10-14,
**dadurch gekennzeichnet,**
**dass** die Haltemittel (20; 20a, 20b) getrennt auf der ersten Seite (4) und auf der zweiten Seite (4') der Tragevorrichtung (3) vorhanden sind.

16. Trageanordnung nach einem der vorhergehenden Ansprüche,
**gekennzeichnet durch**
eine zweite Zugvorrichtung (15b), welche mit der ersten Seite (4) und der zweiten Seite (4') der Tragevorrichtung (3) gekoppelt ist, um darauf einzuwirken, wobei die zweite Zugvorrichtung (15b) mit der Tragevorrichtung (3) an Positionen versetzt von denjenigen gekoppelt ist, an welchen die Zugvorrichtung (15) mit der Tragevorrichtung (3) gekoppelt ist.

17. Trageanordnung nach Anspruch 16,
**gekennzeichnet durch**
eine zweite Bowdenzug-Anordnung (10b), und
eine zweite Koppelvorrichtung (30b), um die zweite Zugvorrichtung (15b) und die zweite Bowdenzug-Anordnung (10b) zu koppeln.

18. Trageanordnung nach einem der vorhergehenden Ansprüche,
**dadurch gekennzeichnet,**
**dass** die Tragevorrichtung (3) ein erstes Seitenteil (4), welches die erste Seite ausbildet, und ein zweites Seitenteil (4'), welches die zweite Seite der Tragevorrichtung (3) ausbildet, umfasst.

19. Trageanordnung nach Anspruch 18,
**dadurch gekennzeichnet,**
**dass** die Tragevorrichtung (3) darüber hinaus mehrere Querteile (6) umfasst, welche sich zwischen dem ersten Seitenteil (4) und dem zweiten Seitenteil (4') erstrecken.

20. Trageanordnung nach einem der vorhergehenden Ansprüche,
**dadurch gekennzeichnet,**
**dass** die Tragevorrichtung einen Drahtrahmen (3) und/oder umspritzte Drähte umfasst.

21. Trageanordnung nach einem der vorhergehenden Ansprüche,
**gekennzeichnet durch**
eine angetriebene oder manuelle Betätigungsvorrichtung (40), mit welcher der Bowdenzug-Draht (12) gekoppelt ist und welche ausgestaltet ist, um den Bowdenzug-Draht (12) relativ zu der Bowdenzug-Hülle (11) zu entspannen oder zurückzuziehen, um einen Zug des Bowdenzug-Drahtes (12) einzustellen.

22. Trageanordnung nach Anspruch 21,
**dadurch gekennzeichnet,**
**dass** die Betätigungsvorrichtung eine angetriebene Betätigungsvorrichtung (40) ist, welche gesteuert ist, so dass der Bowdenzug-Draht (12) relativ zu der Bowdenzug-Hülle (11) wiederholend gelöst oder zurückgezogen wird, um so einen Massageeffekt zu erzeugen.

23. Trageanordnung nach einem der vorhergehenden Ansprüche,
**dadurch gekennzeichnet,**
**dass** die Koppelvorrichtung (30; 30a, 30b) betriebsbereit ist, um einen Zug der Zugvorrichtung (15; 15a, 15b) zu ändern.

24. Sitzstruktur umfassend
einen Sitzrahmen (1) und
die Trageanordnung (2) nach einem der vorhergehenden Ansprüche, welche an dem Sitzrahmen (1) angebracht ist.

## Revendications

1. Ensemble de support pour un siège, comprenant:
un dispositif de support (3) configuré de manière à être attaché à un cadre de siège (1) et présentant un premier côté (4) et un second côté (4'), dans lequel le dispositif de support est réglable en agissant sur ledit premier côté (4) et ledit second côté (4'),
un ensemble de câble Bowden (10; 10a, 10b) comprenant un fil de câble Bowden (12) et une gaine de câble Bowden (11; 11a, 11b), dans lequel une extrémité dudit fil de câble Bowden (12) doit être couplée à un actionneur,
un dispositif de traction (15; 15a, 15b) couplé à la fois audit premier côté (4) et audit second côté (4') dudit dispositif de support (3) afin d'agir sur celui-ci, et
un dispositif de couplage (30; 30a, 30b) pour coupler ledit dispositif de traction (15; 15a, 15b) audit ensemble de câble Bowden (10; 10a, 10b) et utilisable pour agir sur ledit dispositif de traction (15; 15a, 15b) en fonction d'une tension dudit fil de câble Bowden (12),
dans lequel ledit dispositif de couplage (30; 30a, 30b) comprend des moyens de guidage (32) pour guider ledit fil de câble Bowden (12), lesdits moyens de guidage comportant un trou de guidage (32) formé dans un corps (31) dudit dispositif de couplage (30; 30a, 30b) et présentant une partie étroite (34) destinée à recevoir ledit fil de câble Bowden (12) et une partie large (33) destinée à recevoir ladite gaine de câble Bowden (11), le trou de guidage (32) formant un épaulement pour une butée d'une extrémité de ladite gaine de câble Bowden (11),
**caractérisé en ce que** ledit dispositif de traction est un ensemble de câble Bowden supplémentaire (15; 15a, 15b) comprenant un fil de câble Bowden supplémentaire (17; 17a, 17b) et une gaine de câble Bowden supplémentaire (16; 16a, 16b).

2. Ensemble de support selon la revendication 1, **caractérisé en ce qu'**une partie d'extrémité de ladite gaine de câble Bowden (11; 11a, 11b) est attachée audit dispositif de couplage (30; 30a, 30b), une partie d'extrémité (13; 13a, 13b) dudit fil de câble Bowden s'étend à partir dudit dispositif de couplage (30; 30a, 30b) dans une direction d'extension, et ledit dispositif de traction (15; 15a, 15b) s'étend à partir dudit dispositif de couplage (30; 30a, 30b) dans une direction qui est essentiellement opposée à ladite direction d'extension.

3. Ensemble de support selon la revendication 2, **caractérisé en ce que** ladite partie d'extrémité (13; 13a, 13b) dudit fil de câble Bowden est configurée de manière à être attachée au cadre de siège.

4. Ensemble de support selon l'une quelconque des revendications précédentes, **caractérisé par** des moyens de fixation (35, 39) pour attacher une partie d'extrémité dudit fil de câble Bowden supplémentaire (17) audit dispositif de couplage (30).

5. Ensemble de support selon la revendication 4, **caractérisé en ce que** lesdits moyens de fixation comportent un trou de fixation (35) formé dans un corps (31) dudit dispositif de couplage (30) et destiné à recevoir ledit fil de câble Bowden supplémentaire (17) et un embout (39) formé à ladite partie d'extrémité dudit fil de câble Bowden supplémentaire (17), et présentant des dimensions extérieures qui sont plus grandes qu'un diamètre de ladite partie étroite (36).

6. Ensemble de support selon la revendication 5, **caractérisé en ce que** ledit trou de fixation (35) présente une partie élargie (38) destinée à recevoir ledit embout (39).

7. Ensemble de support selon l'une quelconque des revendications 4-6, **caractérisé en ce qu'**une autre partie d'extrémité (18; 18a, 18b) dudit fil de câble Bowden supplémentaire (17; 17a, 17b) est configurée de manière à être connectée à un côté dudit cadre de siège (1), et une partie d'extrémité (13, 14; 13a, 14a, 13b, 14b) dudit fil de câble Bowden (12) qui s'étend à partir dudit dispositif de couplage (30; 30a, 30b) est configurée de manière à être connectée à un autre côté dudit cadre de siège.

8. Ensemble de support selon la revendication 7, **caractérisé en ce que** ladite partie d'extrémité (13, 14; 13a, 14a, 13b, 14b) dudit fil de câble Bowden supplémentaire (17; 17a, 17b) et/ou ladite partie d'extrémité (18; 18a, 18b) dudit fil de câble Bowden (12) présente une forme permettant un engagement par accrochage avec ledit cadre de siège (1).

9. Ensemble de support selon l'une quelconque des revendications précédentes, **caractérisé en ce que** ladite gaine de câble Bowden supplémentaire (16; 16a, 16b) s'étend de façon continue à partir dudit premier côté (4) jusqu'audit second côté (4') dudit dispositif de support (3).

10. Ensemble de support selon l'une quelconque des revendications précédentes, **caractérisé par** des moyens de maintien (20; 20a, 20b) pour maintenir de façon coulissante ledit fil de câble Bowden supplémentaire (17; 17a, 17b) par rapport audit dispositif de support (3).

11. Ensemble de support selon la revendication 10, **caractérisé en ce que** lesdits moyens de maintien (20; 20a, 20b) comprennent une partie de pince (22) pour attacher les moyens de maintien (20; 20a, 20b) audit dispositif de support (3).

12. Ensemble de support selon la revendication 10 ou 11, **caractérisé en ce que** lesdits moyens de maintien (20; 20a, 20b) comprennent des moyens de guidage (21) pour guider une partie dudit fil de câble Bowden supplémentaire (17; 17a, 17b).

13. Ensemble de support selon l'une quelconque des revendications 10-12, **caractérisé en ce que** lesdits moyens de maintien (20; 20a, 20b) comprennent des moyens de retenue (21) pour retenir une extrémité de ladite gaine de câble Bowden supplémentaire (16; 16a, 16b).

14. Ensemble de support selon l'une quelconque des revendications 10-13, **caractérisé en ce que** ladite extrémité de ladite gaine de câble Bowden supplémentaire (16; 16a, 16b) est attachée audit premier côté (4) et/ou audit second côté (4') dudit dispositif de support (3) par l'intermédiaire desdits moyens de maintien (20; 20a, 20b).

15. Ensemble de support selon l'une quelconque des revendications 10-14, **caractérisé en ce que** lesdits moyens de maintien (20; 20a, 20b) sont prévus séparément sur ledit premier côté (4) et sur ledit second côté (4') dudit dispositif de support (3).

16. Ensemble de support selon l'une quelconque des revendications précédentes, **caractérisé par** un second dispositif de traction (15b) couplé audit premier côté (4) et audit second côté (4') dudit dispositif de support (3) afin d'agir sur celui-ci, dans lequel ledit second dispositif de traction (15b) est couplé audit dispositif de support (3) à des positions décalées de celles auxquelles ledit dispositif de traction (15) est couplé audit dispositif de support (3).

17. Ensemble de support selon la revendication 16, **caractérisé par** un second ensemble de câble Bowden (10b), et un second dispositif de couplage (30b) pour coupler ledit second dispositif de traction (15b) audit second ensemble de câble Bowden (10b).

18. Ensemble de support selon l'une quelconque des revendications précédentes, **caractérisé en ce que** ledit dispositif de support (3) comprend un premier élément latéral (4) qui forme ledit premier côté, et un second élément latéral (4') qui forme ledit second côté dudit dispositif de support (3).

19. Ensemble de support selon la revendication 18, **caractérisé en ce que** ledit dispositif de support (3) comprend en outre une pluralité d'éléments transversaux (6) qui s'étendent entre ledit premier élément latéral (4) et ledit second élément latéral (4').

20. Ensemble de support selon l'une quelconque des revendications précédentes, **caractérisé en ce que** ledit dispositif de support comprend une armature en fils (3) et/ou des fils surmoulés.

21. Ensemble de support selon l'une quelconque des revendications précédentes, **caractérisé par** un actionneur électrique ou manuel (40) auquel ledit fil de câble Bowden (12) est couplé et qui est configuré de manière à relâcher ou à rétracter de façon sélective ledit fil de câble Bowden (12) par rapport à ladite gaine de fil Bowden (11) afin de régler une tension dudit fil de câble Bowden (12).

22. Ensemble de support selon la revendication 21, **caractérisé en ce que** ledit actionneur est un actionneur électrique (40) qui est commandé de telle sorte que le fil de câble Bowden (12) soit relâché ou rétracté de façon itérative par rapport à ladite gaine de fil Bowden (11) de manière à produire un effet de massage.

23. Ensemble de support selon l'une quelconque des revendications précédentes, **caractérisé en ce que** ledit dispositif de couplage (30; 30a, 30b) est utilisable pour modifier une tension dudit dispositif de traction (15; 15a, 15b).

24. Structure de siège, comprenant un cadre de siège (1) et l'ensemble de support (2), selon l'une quelconque des revendications précédentes, attaché audit cadre de siège (1).
